# EUROPÄISCHE PATENTSCHRIFT

(11) **EP 1 291 216 B1**
(45) Veröffentlichungstag und Bekanntmachung des Hinweises auf die Patenterteilung: **30.08.2006**
(21) Anmeldenummer: 02014684.1
(22) Anmeldetag: 03.07.2002
(51) Int. Cl.: B60J 7/02, B60J 7/057

(54) **Rahmen für ein Fahrzeug-Schiebedach oder -Schiebehebedach**
Frame for a vehicle sliding roof or tilt-sliding roof
Cadre pour un toit coulissant de véhicule ou toit levant et coulissant

(30) Priorität: 11.09.2001 DE 10144742
(43) Veröffentlichungstag der Anmeldung: 12.03.2003
(73) Patentinhaber: ArvinMeritor GmbH, 63128 Dietzenbach (DE)
(72) Erfinder: Imgram, Bardo, Dipl.-Ing., 63500 Seligenstadt (DE); Roeder, Joachim, Dipl.-Ing., 63165 Mühlheim (DE); Becher, Thomas, Dipl.-Ing., 63110 Rodgau (DE)
(74) Vertreter: Oppermann, Ewald

(56) Entgegenhaltungen:
- DE-A- 3 532 103
- DE-A- 10 053 531
- US-A- 5 104 178
- PATENT ABSTRACTS OF JAPAN vol. 2000, no. 20, 10. Juli 2001 (2001-07-10) -& JP 2001 063371 A (YACHIYO INDUSTRY CO LTD), 13. März 2001 (2001-03-13)
- PATENT ABSTRACTS OF JAPAN vol. 1998, no. 13, 30. November 1998 (1998-11-30) -& JP 10 203173 A (NISSAN MOTOR CO LTD), 4. August 1998 (1998-08-04)
- PATENT ABSTRACTS OF JAPAN vol. 1999, no. 02, 26. Februar 1999 (1999-02-26) -& JP 10 297283 A (DAIKYO WEBASTO CO LTD), 10. November 1998 (1998-11-10)
- PATENT ABSTRACTS OF JAPAN vol. 2000, no. 01, 31. Januar 2000 (2000-01-31) -& JP 11 278059 A (OI SEISAKUSHO CO LTD), 12. Oktober 1999 (1999-10-12)

## Beschreibung

Die Erfindung bezieht sich auf einen Rahmen für ein Fahrzeug-Schiebedach oder -Schiebehebedach, entsprechend dem Oberbegriff des Patentanspruchs 1.

Ein derartiger bekannter Rahmen (DE 40 14 487 C1) ist an den Verbindungsstellen zwischen den Eckbereichen des Vorderteils und den Seitenteilen so ausgebildet, daß die Enden der Führungsrohre über die Eckbereiche des Vorderteils überstehen und in die Kabelführungskanäle in den Seitenteilen einsteckbar sind. Hierdurch soll bei der Montage die Verbindung von Vorderteil und Seitenteilen die für erforderlich gehaltene Verwindungssteifigkeit und Maßhaltigkeit erzielt werden, so daß diese überstehenden Führungsrohrenden als Montagehilfsmittel zum Zusammensetzen und Ausrichten der Längsteile und des Vorderteils des Rahmens dienen. Weiterhin soll dadurch ein glatter Übergang zwischen den überstehenden Enden der Führungsrohre und den Führungskanälen in den Seitenteilen vorhanden sein.

Auf diese Weise entsteht an den Übergangsstellen zwischen den Rohrenden und den Führungskanälen aber eine Stufenbildung, die bei Verschiebungen der Antriebskabel zu unerwünschter Geräuschbildung führen kann, wenn die Drahtgewindewicklungen der Antriebskabel über die Stufen laufen. Darüber hinaus können insbesondere bei einer mit Elektromotor ausgerüsteten Antriebsvorrichtung Motorschwingungen in unerwünschter Weise direkt über die Führungsrohre auf die aus Metall bestehenden Seitenteile übertragen werden.

Der Erfindung liegt die Aufgabe zugrunde, einen Rahmen der eingangs angegebenen Ausbildung bereitzustellen, bei welchem an den Übergangsstellen zwischen den Führungsrohren des Vorderteils und den Führungskanälen der Seitenteile keine Geräusche entstehen und keine Motorschwingungen übertragen werden können.

Diese Aufgabe wird erfindungsgemäß durch die im Patentanspruch 1 angegebenen Merkmale gelöst. Vorteilhafte oder zweckmäßige Weiterbildungen sind in den Unteransprüchen angegeben und nachfolgend ebenfalls beschrieben.

Durch den Abstand zwischen den Führungsrohrenden und den Führungskanälen bzw. den die Führungskanäle aufweisenden metallischen Seitenteilen sind die Führungsrohre von den Seitenteilen gewissermaßen entkoppelt, so daß unmittelbare Schwingungsübertragungen zwischen diesen Elementen ausgeschlossen sind. Durch die Abstände zwischen den Führungsrohrenden und den Führungskanälen in den Seitenteilen treten zwischen diesen unterschiedlichen Abschnitten der Antriebskabelführung auch keine Stufenbildungen auf.

Die Verbindungselemente aus Kunststoff können als getrennte Teile ausgebildet sein, die einerseits mit den Eckbereichen des Vorderteils und andererseits mit den Seitenteilen beispielsweise durch Klipsverbindungen in positionierter Lage fest verbindbar sind, vorzugsweise sind die Verbindungselemente jedoch integraler Bestandteil der Eckbereiche selbst, wie im Anspruch 2 angegeben ist.

Die Enden der Führungsrohre sind in Weiterführung des Erfindungsgedankens entsprechend Anspruch 3 innerhalb der Eckbereiche mit Kunststoff umspritzt, wobei an jedes Führungsrohr ein den Abstand zum jeweils zugehörigen Führungskanal im Seitenteil überbrückender Hohlraum im Verbindungselement fluchtend angeschlossen ist.

Zur Vermeidung jeder Stufenbildung innerhalb der Antriebskabelführung sind entsprechend Anspruch 4 zweckmäßig die Enden der Führungsrohre und gemäß Anspruch 7 auch die Eintrittsenden der Kabelführungskanäle trichterförmig erweitert.

In dieselbe Richtung zielt auch die im Anspruch 5 angegebene Maßnahme, wonach die Querschnittsabmessungen der Hohlräume größer als die Innendurchmesser der Führungsrohre und der Kabelführungskanäle sind. Auf diese Weise kommen die Antriebskabel mit den Innenwandungen der Hohlräume, die entsprechend Anspruch 6 zweckmäßig zylindrisch geformt sind, bei Verschiebebewegungen nicht in Berührung.

Um eine einfach zu erzielende Ausfluchtung der Führungsrohrenden mit den Kabelführungskanälen bei der Vereinigung des Vorderteils mit den Seitenteilen sicherzustellen, sind vorteilhaft an den Eckbereichen Auflagervorsprünge für die Seitenteile und seitliche Anschlagelemente für die Seitenteile einteilig aus Kunststoff angeformt, wie das im Anspruch 8 angegeben ist. Diese Vorsprünge können entsprechend Anspruch 9 zur Erzielung einer einfach herzustellenden Vereinigung der Rahmenteile herangezogen werden. Hierzu können nach Anspruch 10 durch die Vorsprünge und die Seitenteile geführte Schraubverbindungen verwendet werden.

Weitere Einzelheiten der Erfindung werden nachfolgend unter Bezugnahme auf die ein bevorzugtes Ausführungsbeispiel teilweise schematisch darstellenden Zeichnungen näher erläutert. Darin zeigt:
- Fig. 1: eine Perspektivansicht eines Kraftfahrzeugdachs mit eingebautem Schiebedach, dargestellt mit geschlossenem Deckel,
- Fig. 2: die abgebrochene Draufsicht auf den Rahmen der Schiebedachkonstruktion,
- Fig. 3: den abgebrochenen Schnitt entlang der Linie III-III in Fig. 2,
- Fig. 4: den abgebrochenen Schnitt entlang der Linie IV-IV in Fig. 2 und
- Fig. 5: den abgebrochenen Schnitt entlang der Linie V-V in Fig. 2.

Der Deckel 1 schließt die in der festen Dachfläche 2 angeordnete Dachöffnung 3 und kann in dem für Schiebedächer typischen Bewegungsablauf nach Absenken seiner Hinterkante unter die hintere feste Dachfläche 2 ganz oder teilweise verschoben werden. Wenn es sich um ein Schiebehebedach handelt, kann der Deckel 1 in dem für diesen Dachtyp typischen zusätzlichen Bewegungsablauf außerdem noch nach Art vorn scharnierter Klappen ausgehend von der Schließstellung durch Anheben seiner Hinterkante ggf. stufenlos zur Bildung einer hinteren Lüftungsöffnung nach oben verschwenkt werden. Im Ausführungsbeispiel handelt es sich um einen Deckel 1 mit Glasplatte 4, einem aus Kunststoff daran angeschäumten Deckelrahmen 5 und einer die Deckelplatte 4 und den Deckelrahmen 5 umgebenden Randspaltdichtung 6, die zur dichten Anlage an eine die Dachöffnung 3 begrenzende Abkantung 7 des die feste Dachfläche 2 bildenden Dachblechs bestimmt ist. An der festen Dachfläche 2 bzw. ihrer Abkantung 7 ist von unten her ein die Dachöffnung 3 ganz oder teilweise umgebender Verstärkungsrahmen 8 befestigt.

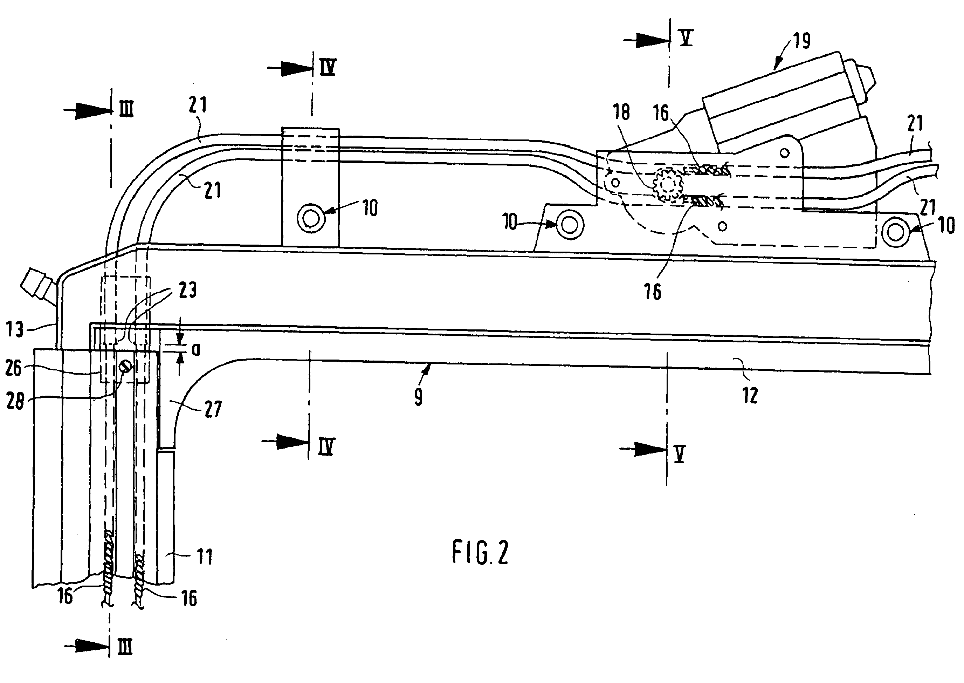

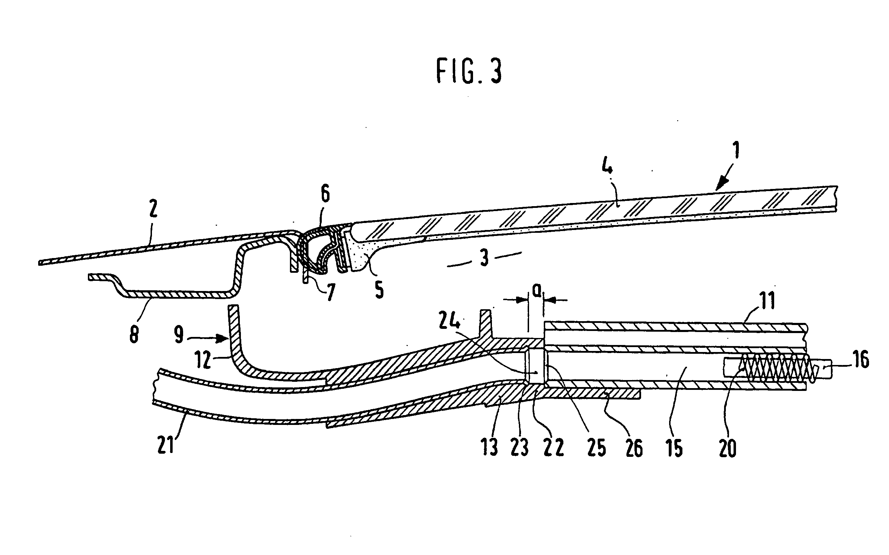

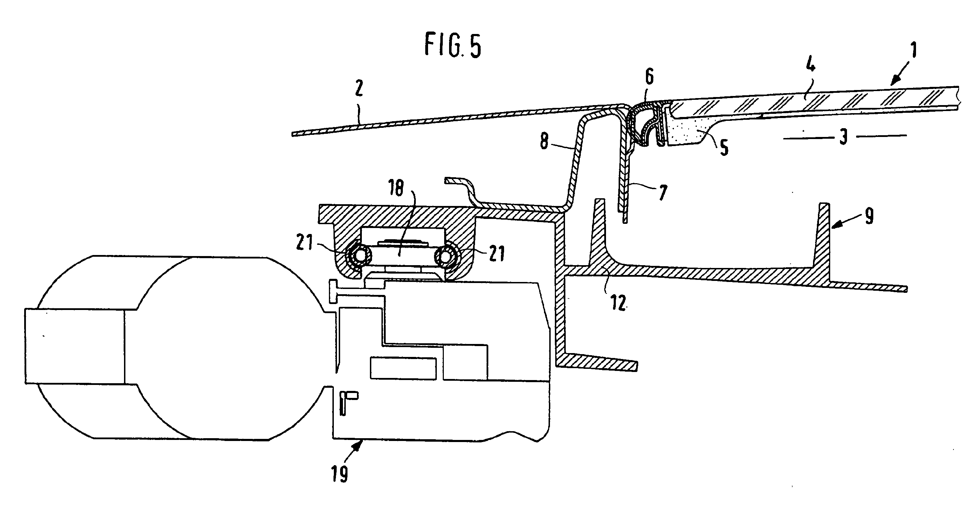

Obwohl in Fig. 2 nur der Rahmen 9 in Draufsicht dargestellt ist, sind in den Schnittdarstellungen gemäß den Figuren 3 bis 5 jeweils auch die oberhalb des Rahmens 9 befindlichen Teile der Dachkonstruktion in ihrer Lage nach Montage des Rahmens dargestellt, nämlich der Deckel 1, die feste Dachfläche 2 und der Verstärkungsrahmen 8.

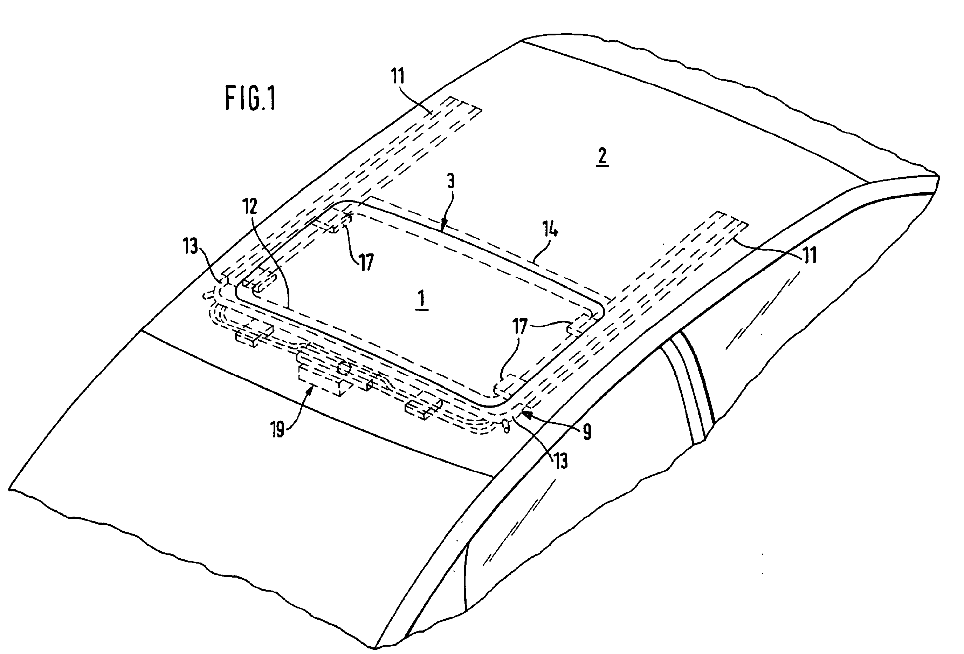

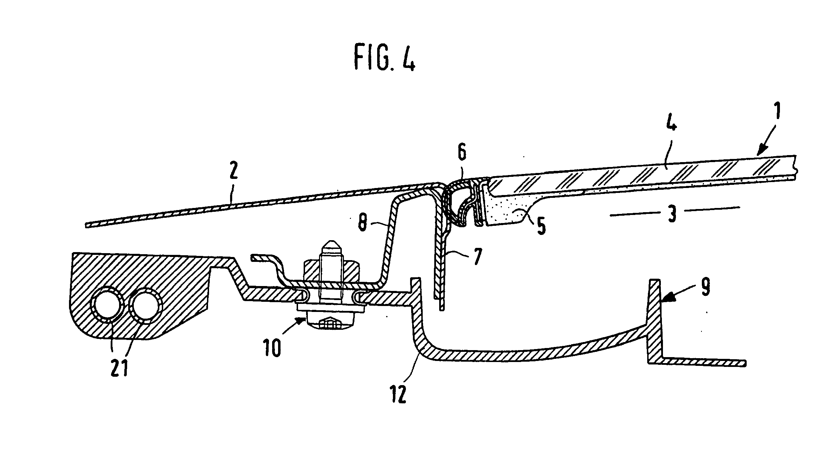

Der nachfolgend näher beschriebene Rahmen 9 ist unterhalb der festen Dachfläche 2 an mehreren voneinander beabstandeten Stellen, von denen aus Fig. 2 drei ersichtlich sind, mittels Schraubverbindungen 10 montiert, von denen eine in Fig. 4 dargestellt ist.Der Rahmen 9 umfaßt zwei parallel zueinander angeordnete Seitenteile 11 aus Metall, die beispielsweise aus einem Aluminium-Strangpreßprofil gebildet sind, und ein als Kunststoffspritzteil ausgebildetes Vorderteil 12, welches als Übergang zu den Seitenteilen 11 angeformte Eckbereiche 13 besitzt. Etwa in der Mitte ihrer Länge sind die beiden Seitenteile 11 durch ein daran befestigtes Querteil 14 gegeneinander ausgesteift, wie in Fig. 1 angedeutet ist. In Fig. 2 ist nur das linke Seitenteil 11 dargestellt, weil das rechte Seitenteil und der Eckbereich 13 entsprechend spiegelbildlich ausgeführt sind.

In den Seitenteilen 11 befinden sich jeweils zwei Führungskanäle 15, in denen Antriebskabel 16 drucksteif verschiebbar geführt sind. Die Antriebskabel 16, von denen in den Figuren 2 und 3 jeweils nur kurze Abschnitte eingezeichnet sind, stehen mit dem Deckel 1, der über Führungsschuhe 17 (Fig. 1) an den Seitenteilen 11 geführt ist, in Antriebsverbindung. Am Vorderteil 12 ist ein Antriebsritzel 18 drehbar gelagert, welches im gezeigten Beispiel von einer Elektromotor-Getriebe-Einheit als Antriebsvorrichtung 19 wahlweise in der einen oder anderen Drehrichtung antreibbar ist. Die Antriebsvorrichtung kann aber auch als Handkurbelantrieb ausgebildet sein.

Das Antriebsritzel 18 steht mit beiden Antriebskabeln 16 ständig im Zahneingriff, so daß Drehungen des Antriebsritzels 18 jeweils gegenläufige Verschiebebewegungen der beiden Antriebskabel 16 in ihren Führungen hervorrufen. Die Antriebskabel 16 sind für den Zahneingriff mit schraubenlinienförmigen Drahtwicklungen 20 versehen, wie aus Fig. 3 deutlich erkennbar ist, so daß sie von dem entsprechend verzahnten Antriebsritzel 18 zahnstangenähnlich angetrieben werden. Dieses Antriebssystem wird seit Jahrzehnten für Schiebedachantriebe benutzt und bedarf daher hier keiner näheren Erläuterung.

Am Vorderteil 12 sind zur Führung der Antriebskabel 16 Führungsrohre 21 auf der der Dachöffnung abgelegenen Seite des Vorderteils 12 befestigt, beispielsweise durch stellenweises Umspritzen der Führungsrohre 21 mit dem Kunststoffwerkstoff des Vorderteils 12, so daß nach dem Formvorgang die vorher in die Spritzform eingelegten Führungsrohre 21 fester Bestandteil des Vorderteils 12 sind. Diese Verbindungsstellen der Führungsrohre 21 mit dem Vorderteil 12 gehen aus den Figuren 2, 4 und 5 hervor.

Wie aus den Figuren 2 und 3, insbesondere aber aus Fig. 3 zu ersehen ist, enden die Führungsrohre 21 in den Eckbereichen 13 des Vorderteils 12 vor den jeweils zugehörigen Führungskanälen 15 der Seitenteile 11 mit einem Abstand a. Diese Abstände a zwischen den jeweils zusammengehörigen, aber voneinander entkoppelten Führungsrohr-/Führungskanal-Paaren 21/15 werden durch sowohl an die Eckbereiche 13 als auch an die Seitenteile 11 fest angeschlossene Verbindungselemente 22 aus Kunststoff überbrückt. Im gezeichneten Beispiel sind diese Verbindungselemente 22 aus Kunststoff einteilig mit den Eckbereichen 13 geformt.

Die Enden 23 der Führungsrohre 21 sind hierbei in das Kunststoffmaterial der Eckbereiche 13 durch Umspritzen eingebettet. In den Verbindungselementen 22 ist an den Enden 23 der Führungsrohre 21 jeweils ein fluchtend mit dem Führungsrohr 21 anschließender Hohlraum 24 gebildet. Dieser zylindrisch geformte Hohlraum endet jeweils an der Stoßfläche des Verbindungselements 22 mit dem zugehörigen Seitenteil 11 und fluchtet mit dem zugehörigen Kabelführungskanal 15. Die Enden 23 der Führungsrohre 21 sind etwa trichterförmig erweitert. Dementsprechend sind auch die Eintrittsenden 25 der Kabelführungskanäle 15 ebenfalls trichterförmig erweitert. In Verbindung damit, daß die Querschnittsabmessungen der Hohlräume 24, d.h. bei zylindrischer Ausbildung ihre Durchmesser, größer sind als die Innendurchmesser der Führungsrohre 21 und der Kabelführungskanäle 15, wird sichergestellt, daß an diesen Überbrückungsstellen zwischen den Führungsrohren 21 und den Führungskanälen 15 keine Stufenbildung vorhanden ist, die bei Verschiebebewegungen der Antriebskabel 16 aufgrund der Drahtwicklungen 20 Rattergeräusche hervorrufen könnte.

Wie Fig. 3 verdeutlicht, ist an den Eckbereichen 13 jeweils ein Vorsprung 26 zur positionierten Auflagerung des zugehörigen Seitenteils 11 angeformt. Weiterhin ist ein seitliches Anschlagelement 27 zur positionierten Anlage des Seitenteils 11 an jeden Eckbereich 13 angeformt. Vorsprung 26 und Anschlagelement 27 stellen sicher, daß bei der Montage der Rahmenteile 11 und 12 die Führungskanäle 15 mit den Führungsrohren 21 präzise zur achsgleichen Fluchtung gelangen.

Bei der Montage können das Vorderteil 12 und die Seitenteile 11 mittels der Vorsprünge 26 fest miteinander verbunden werden, wobei diese feste Verbindung durch Schrauben 28 od.dgl. erfolgt, die sowohl durch die Vorsprünge 26 als auch durch die Seitenteile 11 hindurchgeführt sind, wie in Fig. 2 angedeutet ist.

Vorgeschlagen wird ein Rahmen 9 für ein Fahrzeug-Schiebedach oder -Schiebehebedach, bestehend im wesentlichen aus einem aus Kunststoff spritzgeformten Vorderteil 12 mit angeformten Eckbereichen 13 und zwei über die Eckbereiche fest angeschlossenen Seitenteilen 11 aus Metall, wobei in das Vorderteil 12 Führungsrohre 21 integriert und in den Seitenteilen 11 daran anschließende Führungskanäle 15 angeordnet sind, die gemeinsam Antriebskabel 16 für Verlagerungen eines Deckels 1 relativ zu einer Dachöffnung 3 der Dachkonstruktion drucksteif führen. Die zusammengehörenden Führungsrohre 21 und die Führungskanäle 15 berühren sich nicht, sondern sind durch Abstände a, die durch Verbindungselemente 22 überbrückt werden, voneinander entkoppelt, so daß aus dem Kabelantriebssystem herrührende Schwingungen von den Führungsrohren 21 nicht auf die metallischen Seitenteile 11 übertragen werden können. Die Enden 23 der Führungsrohre 21 und die davon beabstandeten Eintrittsenden 25 der Führungskanäle 15 sowie der die Enden 23, 25 überbrückende Hohlraum 24 sind auf besondere Weise stufenlos ausgebildet, um Geräusche bei Antriebskabelverschiebungen zu vermeiden. Der vorgeschlagene Rahmen kann auch bei Oberfirstschiebedächern (Spoilerdächern) verwendet werden.

### Bezugszeichenliste

- 1: Deckel
- 2: feste Dachfläche
- 3: Dachöffnung
- 4: Glasplatte
- 5: Deckelrahmen
- 6: Randspaltdichtung
- 7: Abkantung
- 8: Verstärkungsrahmen
- 9: Rahmen
- 10: Schraubverbindungen
- 11: Seitenteile
- 12: Vorderteil
- 13: Eckbereiche
- 14: Querteil
- 15: Führungskanäle
- 16: Antriebskabel
- 17: Führungsschuhe
- 18: Antriebsritzel
- 19: Antriebsvorrichtung
- 20: Drahtwicklungen
- 21: Führungsrohre
- 22: Verbindungselemente
- 23: Enden der Führungsrohre
- 24: Hohlraum
- 25: Eintrittsenden
- 26: Vorsprung
- 27: Anschlagelement
- 28: Schrauben
- a: Abstand

## Patentansprüche

1. Rahmen für ein Fahrzeug-Schiebedach oder -Schiebehebedach, der unterhalb einer festen Dachfläche (2) montierbar, zur Führung und Halterung eines verschiebbaren oder verschiebbaren und schwenkbaren, einer entsprechenden Dachöffnung (3) in der festen Dachfläche (2) zugeordneten Deckels (1) ausgebildet ist, zwei parallel zueinander angeordnete Seitenteile (11) aus metall und ein als Kunststoffspritzteil ausgebildetes Vorderteil (12) aufweist, welches als Übergang zu den Seitenteilen (13) angeformte Eckbereiche (13) besitzt, wobei die Seitenteile (11) in Führungskanälen (15) Antriebskabel (16) drucksteif führen, die mit dem über Führungsschuhe (17) an den Seitenteilen (11) geführten Deckel (1) in Antriebsverbindung stehen, in am Vorderteil (12) angebrachten Führungsrohren (21) verlaufen und mit einer am Vorderteil (12) angeordneten Antriebsvorrichtung (19) zum Verschieben der Antriebskabel (16) in den Führungsrohren (21) und den Führungskanälen (15) eingreifen, **dadurch gekennzeichnet, daß** die Führungsrohre (21) in den Eckbereichen (13) des Vorderteils (12) vor den jeweils zugehörigen Führungskanälen (15) der Seitenteile (11) jeweils mit Abstand (a) enden, und daß diese Abstände durch sowohl an die Eckbereiche als auch an die Seitenteile fest angeschlossene Verbindungselemente aus Kunststoff überbrückt sind.

2. Rahmen nach Anspruch 1, **dadurch gekennzeichnet, daß** die Verbindungselemente aus Kunststoff einteilig mit den Eckbereichen geformt sind.

3. Rahmen nach Anspruch 1 oder 2, **dadurch gekennzeichnet, daß** die Enden (23) der Führungsrohre (21) in das Kunststoffmaterial der Eckbereiche (13) durch Umspritzen eingebettet sind, wobei in den Verbindungselementen (22) an die Enden (23) der Führungsrohre (21) jeweils ein fluchtend mit dem Führungsrohr (21) anschließender Hohlraum (24) gebildet ist, der an der Stoßfläche des Verbindungselements (22) mit dem Seitenteil (11) und fluchtend mit dem zugehörigen Kabelführungskanal (15) endet.

4. Rahmen nach einem der Ansprüche 1 bis 3, **dadurch gekennzeichnet, daß** die Enden (23) der Führungsrohre (21) trichterförmig erweitert sind.

5. Rahmen nach Anspruch 3 oder 4, **dadurch gekennzeichnet, daß** die Querschnittsabmessungen der Hohlräume (24) größer als die Innendurchmesser der Führungsrohre (21) und der Kabelführungskanäle (15) sind.

6. Rahmen nach einem der Ansprüche 3 bis 5, **dadurch gekennzeichnet, daß** die Hohlräume (24) zylindrisch geformt sind.

7. Rahmen nach einem der Ansprüche 3 bis 6, **dadurch gekennzeichnet, daß** die Eintrittsenden (25) der Kabelführungskanäle (15) ebenfalls trichterförmig erweitert sind.

8. Rahmen nach einem der Ansprüche 1 bis 7, **dadurch gekennzeichnet, daß** an den Eckbereichen jeweils ein Vorsprung (26) zur positionierten Auflagerung des zugehörigen Seitenteils (11) und ein seitliches Anschlagelement (27) zur positionierten Anlage des Seitenteils angeformt sind.

9. Rahmen nach Anspruch 8, **dadurch gekennzeichnet, daß** das Vorderteil (12) und die Seitenteile (11) mittels der Vorsprünge (26) fest miteinander verbindbar sind.

10. Rahmen nach den Ansprüchen 8 und 9, **dadurch gekennzeichnet, daß** die feste Verbindung zwischen Vorderteil (12) und Seitenteilen (11) durch Schrauben (28) od. dgl. erfolgt, die durch die Vorsprünge (26) und die Seitenteile (11) hindurchgeführt sind.

## Claims

1. Frame for a vehicle sliding roof or slide-and-tilt roof, which frame can be fitted beneath a fixed roof surface (2) and is designed to guide and support a slidable, or slidable and tiltable cover (1) assigned to a corresponding roof opening (3) in the fixed roof surface (2), and which has two metal side members (11) arranged parallel with one another and a front member (12) formed as a plastic injection moulded part, which as transition to the side members (11) has moulded-on corner areas (13), the side members (11) guiding drive cables (16) pressure resistant in guide channels (15), the cables being drive-connected to the cover (1), guided on the side members (11) by means of guide shoes (17), running in guide tubes (21) fitted to the front member (12) and engaging with a drive device (19) arranged on the front member (12) for the displacement of the drive cables (16) in the guide tubes (21) and the guide channels (15), **characterized in that** the guide tubes (21) each terminate in the corner areas (13) of the front member (12) at an interval (a) in front of the associated guide channels (15) of each of the side members (11), and that these intervals are spanned by plastic connectors fixed both to the corner areas and to the side members.

2. Frame according to claim 1, **characterized in that** the plastic connectors are integrally formed with the corner areas.

3. Frame according to claim 1 or 2, **characterized in that** the ends (23) of the guide tubes (21) are embedded in the plastic material of the corner areas (13) by moulding, whereby a hollow space (24) adjoining and aligning with the guide tube (21) being formed in the connectors (22) at each of the ends (23) of the guide tubes (21), the hollow space terminating at the end face of the connector (22) abutting the side member (11), and aligning with the associated cable guide channels (15).

4. Frame according to one of the claims 1 to 3, **characterized in that** the ends (23) of the guide tubes (21) widen out in a funnel shape.

5. Frame according to claim 3 or 4, **characterized in that** the cross-sectional dimensions of the hollow spaces (24) are greater than the inside diameters of the guide tubes (21) and of the cable guide channels (15).

6. Frame according to one of claims 3 to 5, **characterized in that** the hollow spaces (24) are of cylindrical shape.

7. Frame according to one of claims 3 to 6, **characterized in that** the inlet ends (25) of the cable guide channels (15) also widen out in a funnel shape.

8. Frame according to one of claims 1 to 7, **characterized in that** a projection (26) for positioned supporting of the associated side member (11) and a lateral stop (27) for the positioned abutment of the side member are moulded onto each of the corner areas.

9. Frame according to Claim 8, **characterized in that** the front member (12) and the side members (11) can be fixed to one another by means of the projections (26).

10. Frame according to claim 8 and 9, **characterized in that** the fixed connection between front member (12) and side members (11) is achieved by means of screws (28) or the like, which are passed through the projections (26) and the side members (11).

## Revendications

1. Cadre pour un toit coulissant ou un toit coulissant et basculant d'un véhicule, qui peut être monté sous une surface de toit fixe (2), est conçu pour guider et supporter un panneau de toit (1) coulissant ou coulissant et basculant associé à une ouverture de toit (3) correspondante dans la surface de toit fixe (2), et comporte deux parties latérales (11) en métal, disposées parallèlement l'une à l'autre, ainsi qu'une partie avant (12) réalisée en tant que pièce en matière plastique moulée par injection sur laquelle sont formées par moulage des zones de coin (13) en guise de transition vers les parties latérales (11), les parties latérales (11) guidant de manière rigide en compression, dans des canaux de guidage (15), des câbles d'entraînement (16) qui sont en liaison de transmission d'entraînement avec le panneau de toit (1) guidé par l'intermédiaire de patins de guidage (17) dans les parties latérales (11), s'étendent dans des tubes de guidage (21) agencés sur la partie avant (12), et sont en prise avec un dispositif d'entraînement (19) disposé sur la partie avant (12) et destiné à produire le coulissement des câbles d'entraînement (16) dans les tubes de guidage (21) et les canaux de guidage (15), **caractérisé en ce que** les tubes de guidage (21), dans les zones de coin (13) de la partie avant (12), se terminent chacun à distance (a) des canaux de guidage (15) respectivement correspondants dans les parties latérales (11), et **en ce que** ces distances sont comblées par des éléments de liaison en matière plastique raccordés de manière fixe, aussi bien aux zones de coin qu'aux parties latérales.

2. Cadre selon la revendication 1, **caractérisé en ce que** les éléments de liaison en matière plastique sont moulés d'un seul tenant avec les zones de coin.

3. Cadre selon la revendication 1 ou 2, **caractérisé en ce que** les extrémités (23) des tubes de guidage (21) sont encastrées dans la matière plastique des zones de coin (13), moulée autour par injection, et dans les éléments de liaison (22), au niveau de chacune des extrémités (23) des tubes de guidage (21), est formée une cavité (24) qui se raccorde au tube de guidage (21) en étant alignée avec celui-ci, et se termine au niveau de la surface de jointure entre l'élément de liaison (22) et la partie latérale (11) de manière alignée avec le canal de guidage de câble (15) associé.

4. Cadre selon l'une des revendications 1 à 3, **caractérisé en ce que** les extrémités (23) des tubes de guidage (21) s'élargissent en forme d'entonnoir.

5. Cadre selon la revendication 3 ou 4, **caractérisé en ce que** les dimensions de section transversale des cavités (24) sont plus grandes que les diamètres intérieurs des tubes de guidage (21) et des canaux de guidage de câble (15).

6. Cadre selon l'une des revendications 3 à 5, **caractérisé en ce que** les cavités (24) sont de forme cylindrique.

7. Cadre selon l'une des revendications 3 à 6, **caractérisé en ce que** les extrémités d'entrée (25) des canaux de guidage de câble (15) sont également élargies en forme d'entonnoir.

8. Cadre selon l'une des revendications 1 à 7, **caractérisé en ce que** dans chacune des zones de coin sont formés par moulage respectivement un talon (26) destiné à réaliser un appui de support positionné de la partie latérale (11) associée, et un élément latéral de butée (27) pour l'appui positionné de la partie latérale.

9. Cadre selon la revendication 8, **caractérisé en ce que** la partie avant (12) et les parties latérales (11) peuvent être mutuellement reliées de manière fixe au moyen des talons (26).

10. Cadre selon les revendications 8 et 9, **caractérisé en ce que** la liaison fixe entre la partie avant (12) et les parties latérales (11) est effectuée à l'aide de vis (28) ou d'éléments similaires, qui traversent les talons (26) et les parties latérales (11).
